# EUROPEAN PATENT SPECIFICATION

(11) **EP 1 863 740 B1**
(45) Date of publication and mention of the grant of the patent: **13.05.2009**
(21) Application number: 06717119.9
(22) Date of filing: 21.03.2006
(51) Int. Cl.: C01F 7/00, C01F 7/56

(54) **METHOD OF TREATING POLYALUMINIUM COMPOUNDS**
VERFAHREN ZUR BEHANDLUNG VON POLYALUMINIUMVERBINDUNGEN
MÉTHODE DE TRAITEMENT DE COMPOSÉS DE TYPE POLYALUMINIUM

(30) Priority: 01.04.2005 EP 05102587
(43) Date of publication of application: 12.12.2007
(73) Proprietor: Akzo Nobel N.V., 6800 SB Arnhem (NL); Eka Chemicals AB, 445 80 Bohus (SE)
(72) Inventor: ANDERSSON, Kjell, Rune, S-411 18 Göteborg (SE); LINDGREN, Erik, S-445 34 Bohus (SE)
(74) Representative: Schalkwijk, Pieter Cornelis
(86) International application number: PCT/SE2006/050035
(87) International publication number: WO 2006/104453

(56) References cited:
- WO-A-03/037488
- US-A- 5 985 234
- US-A1- 2004 166 051
- PATENT ABSTRACTS OF JAPAN vol. 1996, no. 07, 31 July 1996 (1996-07-31) & JP 08 059230 A (NISSAN CHEM IND LTD), 5 March 1996 (1996-03-05)

## Description

The present invention relates to a method of treating polyaluminium compounds. Particularly, it relates to a method of increasing the basicity of polyaluminium compounds.

### Background of the invention

The use of polyaluminium compounds is well known in many applications such as water treatment and paper production. Polyaluminium compounds generally have chemical compositions of various amounts of aluminium, hydroxide and anions such as chloride, sulphate, silicate, nitrate and/or bromide. Moreover, polyaluminium compounds usually contain large cationic ions, i.e. oligomeric or polymeric aluminium ions.

The basicity of polyaluminium compounds is a measure of their hydroxyl content which is expressed as the molar ratio of OH to Al.

The most common polyaluminium compound is polyaluminium chloride, often referred to as PAC, which schematically can be expressed by the formula AlₙOHₘCl₃ₙ₋ₘ, The basicity of PAC, expressed as the molar ratio of OH to Al (m/n), is normally between 0.3 to 2.5 depending on the production method. In some applications, however, a basicity higher than many conventional products may be required. Polyaluminium compounds having high basicity are less acidic and corrosive and they also contain larger cationic aluminium ions which is preferable in many applications.

WO 03/037488 discloses a method of treating an aqueous polyaluminium compound solution by separating a retentate fraction having a higher aluminium content than the feed solution from a permeate fraction having a lower aluminium content than the feed solution by means of ultrafiltration. This method provides increased/decreased basicity of the treated polyaluminium chloride compound. However, this method may not always be suitable to provide a polyaluminium compound with high basicity.

It would be desirable to provide a new method of obtaining polyaluminium compound solutions with increased basicity, stability, and aluminium concentration. It would particularly be desirable to provide such method which is energy-saving without the use of costly equipment. It would also be desirable to provide such a method without simultaneously forming by-products such as low-basicity fractions, salts etc. The present invention intends to solve the problems above of the prior art.

### The invention

The present invention relates to a method of treating polyaluminium compounds comprising contacting at least one polyaluminium compound in an aqueous solution with an anion exchange material capable of accepting anions or anionic groups and donating hydroxyl ions for a time necessary to obtain a polyaluminium compound having a higher molar ratio of hydroxide to aluminium than the polyaluminium compound had before contacting it with the anion exchange material.

According to a preferred embodiment, the method concerns treating polyaluminium chloride.

The anions or anionic groups may be e.g. chloride, bromide, sulphate, silicate, nitrate and/or mixtures thereof.

The term polyaluminium compound, as used herein, comprises, besides conventional polyaluminium chloride which can be described as compounds of the general formula AlₙOHₘCl₃ₙ₋ₘ, compounds containing other anion groups such as polyaluminium sulphate, polyaluminium silicate sulphate (PASS), polyaluminium silicate chloride, polyaluminium nitrate, polyaluminium bromide, and modifications and/or derivates and/or mixtures thereof. Such compounds are described in inter alia EP884 278, WO99/35090, US 5,149,400 and EP 181 847.

The anion exchange material may be of any suitable material having any suitable shape, e.g. spherical shape. Preferably, an anion exchange resin is used. The resin may consist of various copolymers having a cross-linked three-dimensional structure to which ionic groups have been attached. Preferably, the anion exchange material is selected from a strong or a weak anionic exchange resin or a mixture thereof. Preferably, the anion exchange material is pretreated e.g. by soaking it in a OH-containing solution, e.g. a NaOH solution of suitable concentration. Additional anion exchange material may be added during any stage of the method.
Anion exchange resins may be prepared from styrene-divinylbenzene crosslinked copolymers. These products could be of either gel type or products with porous structures. Other copolymers for anion exchange resins are methyl styrene (or α-methylstyrene)-divinylbenzene copolymer matrices. These copolymers could also be fluorinated to be more stable for heat and oxidation. There are many other suitable copolymers such as acenapthene-divinylbenzene copolymer, N-vinyl carbazole based matrices, pyridinium resins, acrylic based products etc. A common used method to produce anion exchangers is chloromethylation of crosslinked styrene copolymers. The chloromethylated resin could be further reacted with trimethylamine or dimethylethanolamine to obtain a strong basic anion exchange resin. For weakly basic anion exchange resins the chloromethylated polymer could, for example, be reacted with a polyamine. There are also other methods to obtain anion exchange resins, for example amination of acrylic matrices. Further suitable anionic exchange materials are given by Konrad Dorfner (Synthetic Ion Exchange Resins, p.200-225, 236-289, Walter de Gruyter Berlin, New York, 1991).

The contacting of the polyaluminium compound with anion exchange material may be carried out in a batch or in a column loaded with the anion exchange material through which the polyaluminium compound solution passes whereupon the basicity of it increases.

If the contacting is carried out in a batch, the aqueous solution is preferably homogeneously stirred so as to optimise the contacting of the polyaluminium compound and anion exchange material.

Preferably, the time of contacting of the polyaluminium compound and anion exchange material is from about 1 s to about 10 hours, more preferably 30 s to about 120 min, even more preferably from about 1 min to about 60 min and most preferably from about 2 min to about 30 min.

Preferably, after the contacting, the aqueous solution of polyaluminium compound and anion exchange material is passed through a coarse filter capable of separating the anion exchange material from the treated polyaluminium compound. Suitably, the openings of the coarse filter is in the range from about 0.01 to about 5, preferably from about 0.1 to about 3, and most preferably from about 0.5 to about 2 mm. The separated polyaluminium compound may then be used in any suitable application.

Preferably, the initial molar ratio of OH to Al of the polyaluminium compound, i.e. before the contacting with the anion exchange material is from about 0.3 to about 2.2, more preferably from about 0.6 to about 2, and most preferably from about 0.8 to about 1.8.

Preferably, the method is carried out at a temperature from about -10 to about 100, more preferably from about 10 to about 80, and most preferably from about 15 to about 60 °C.

Preferably, the weight ratio of aluminium in the polyaluminium compound to dry anion exchange material is from about 25 to about 0.01, more preferably from about 10 to about 0.05, and most preferably from about 5 to about 0.1.

Preferably, the pH of the aqueous solution is from about 0.5 to about 7, more preferably from about 1 to about 6, and most preferably from about 1.5 to about 5. The pH may be controlled by any suitable means.

According to one embodiment of the invention, the method as disclosed herein is combined with ultrafiltration treatment as disclosed in WO 03/037488. Such combined treatment made be performed in any way, e.g. pre-treatment by means of ultrafiltration according to WO 03/037488 or anion exchange treatment according to this invention followed by further treatment with the other method.

The invention being thus described, it will be obvious that the same may be varied in many ways. Such variations are not to be regarded as a departure from the scope of the present invention, and all such modifications as would be obvious to one skilled in the art are intended to be included within the scope of the claims. The following examples will further illustrate how the described invention may be performed without limiting the scope of it. If not otherwise stated, all contents and percentages as described herein refer to weight percent.

### Example 1

A polyaluminium chloride product (PAC), ATC 8513 from Eka Chemicals, was used in the tests. This product contained 6.9 weight % aluminium and had a mole ratio OH/Al of 1.4. Treatments of ATC 8513 with three different weight ratios of ion exchange resin to ATC 8513 were performed. The organic ion exchange resin used was Dowex Marathon A2 from the Dow Chemical Company. This product is a strong base anion exchanger having a matrix of styrene-DVB gel with functional groups of dimethylethanol amine. Before use the resin was soaked in 1 wt % sodium hydroxide solution in order to get the resin in OH⁻-form followed by thorough rinsing with water until neutral pH was reached. The resin after this treatment contained around 65 wt% water and this resin was used in the tests. All tests were done at room temperature according to the following procedures a-c:
a) 205 g of the ion exchange resin was added to 51.5 g ATC 8513 under stirring in a glass beaker. After the addition of the resin the PAC/resin solution was stirred for 10 minutes. The mixture was thereafter filtered through a coarse plastic sieve having a pore size less than 70 µm in order to separate the PAC filtrate from the resin. Due to the high water content in the resin there is also a dilution effect when it is added to the PAC solution. The pH of the solution became around 4.
b) This test was performed as in a) but in this case less resin on PAC was used; 200 g resin was added to 100 g ATC 8513. The pH of the final solution was 3.3.
c) In this case the amount of resin was further decreased, 100 g resin to 100 g PAC. The pH of the collected filtrate was 3.3.

The collected filtrates were analyzed for the contents of aluminium, chloride and hydroxyl. In table 1, the results of these analyses are given and compared to the analyses of the original ATC 8513 (no treatment).

**Table 1**

| | No Treatment | Treatment a) | Treatment b) | Treatment c) |
|---|---|---|---|---|
| Cl⁻, mol/kg | 4.20 | 0.65 | 1.49 | 2.34 |
| OH⁻ mol/kg | 3.6 | 2.1 | 2.5 | 2.7 |
| Al, mol/kg | 2.56 | 0.82 | 1.15 | 1.56 |
| Ratio OH/Al, mol/mol | 1.4 | 2.6 | 2.2 | 1.7 |

From the results it could be seen that the anion exchange treatment has increased the molar ratio of OH/Al and that this increase is more pronounced with higher amount of resin added to the same amount of PAC.

### Example 2

In this test a weak base anion exchanger, IRA 96 from Rohm & Haas was used. This ion exchanger is a microporous copolymer of styrene containing tertiary ammonium groups. The resin was wetted with water and regenerated, at a temperature below 60 °C during 1 hour with a 5 wt% sodium hydroxide solution (60 g "dry" NaOH per litre resin). The resin was drained and washed over a filter using a water vacuum pump and the washing was continued until the conductivity of the water filtrate became lower than 100 µS.

320 grams of polyaluminium chloride (containing 8.3 wt% Al and with a molar ratio of OH/Al of 1.3) was added to 128 g (test 1) and 200 g (test 2) respectively of the prepared resin and the mixtures were kept under agitation for 15 minutes. It was noted that the pH increased in the solutions from 1.5 up to 2,5. The PAC was thereafter separated by filtration from the resin and analyses were performed.

The following results were obtained:

**Table 2**

| | Al, mol/ kg | OH, mol/kg | Ratio, mol OH/mol Al |
|---|---|---|---|
| No treatment | 3.1 | 4.05 | 1.3 |
| Test 1 (128 g resin) | 2.17 | 3.46 | 1.6 |
| Test 2 (200 g resin) | 2.43 | 3.66 | 1.5 |

This experiment shows that it is also possible to increase the bacisity in PAC with a weak anion exchanger.

## Claims

1. Method of treating polyaluminium compounds comprising contacting at least one polyaluminium compound in an aqueous solution with an anion exchange material capable of accepting anions or anionic groups and donating hydroxyl ions for a time necessary to obtain a polyaluminium compound having a higher molar ratio of hydroxide to aluminium than the polyaluminium compound had before contacting it with the anion exchange material.

2. Method according to claim 1, wherein the polyaluminium compound is polyaluminium chloride.

3. Method according to claim 1 or 2, wherein the method is carried out in a batch in which the polyaluminium compound and the anion exchange material are homogeneously stirred.

4. Method according to claim 1 or 2, wherein the anion exchange material is loaded in a column through which the polyaluminium compound is passed.

5. Method according to any of claims 1-3, wherein the treated polyaluminium compound and the anion exchange material are passed through a coarse filter capable of separating the anion exchange material from the treated polyaluminium compound.

6. Method according to claim 5, wherein the coarse filter has openings in the range from about 0.01 to about 5 mm.

7. Method according to any of claims 1-6, wherein the contacting time is from about 1 s to about 10 hours.

8. Method according to any of claims 1-7, wherein the initial molar ratio of OH to Al of the polyaluminium compound is from about 0.3 to about 2.2.

9. Method according to any of claims 1-8, wherein the method is carried out at a temperature from about -10 to about 100 °C.

10. Method according to any of claims 1-9, wherein the anion exchange material is pretreated with a solution of a hydroxide-containing salt.

11. Method according to any of claims 1-10, wherein the weight ratio of aluminium in the polyaluminium compound to dry anion exchange material is from about 25 to about 0.01.

12. Method according to any of claims 1-11, wherein regenerated anion exchange material is added during any stage of the method.

## Patentansprüche

1. Verfahren zur Behandlung von Polyaluminiumverbindungen, umfassend das In-Kontakt-Bringen wenigstens einer Polyaluminiumverbindung in einer wässrigen Lösung mit einem Anionenaustauschermaterial, das Anionen oder anionische Gruppen aufnehmen und Hydroxid-Ionen abgeben kann, während einer Zeit, die notwendig ist, um eine Polyaluminiumverbindung zu erhalten, die ein höheres Stoffmengenverhältnis von Hydroxid zu Aluminium aufweist als die Polyaluminiumverbindung vor dem In-Kontakt-Bringen mit dem Anionenaustauschermaterial.

2. Verfahren gemäß Anspruch 1, wobei es sich bei der Polyaluminiumverbindung um Polyaluminiumchlorid handelt.

3. Verfahren gemäß Anspruch 1 oder 2, wobei das Verfahren diskontinuierlich durchgeführt wird und die Polyaluminiumverbindung und das Anionenaustauschermaterial homogen verrührt werden.

4. Verfahren gemäß Anspruch 1 oder 2, wobei das Anionenaustauschermaterial in eine Säule gepackt wird, durch die die Polyaluminiumverbindung geleitet wird.

5. Verfahren gemäß einem der Ansprüche 1 bis 3, wobei die behandelte Polyaluminiumverbindung und das Anionenaustauschermaterial durch einen groben Filter gegeben werden, der das Anionenaustauschermaterial von der behandelten Polyaluminiumverbindung abtrennen kann.

6. Verfahren gemäß Anspruch 5, wobei der grobe Filter Öffnungen im Bereich von etwa 0,01 bis etwa 5 mm aufweist.

7. Verfahren gemäß einem der Ansprüche 1 bis 6, wobei die Kontaktzeit etwa 1 s bis etwa 10 Stunden beträgt.

8. Verfahren gemäß einem der Ansprüche 1 bis 7, wobei das Anfangsstoffmengenverhältnis von OH zu Al in der Polyaluminiumverbindung etwa 0,3 bis etwa 2,2 beträgt.

9. Verfahren gemäß einem der Ansprüche 1 bis 8, wobei das Verfahren bei einer Temperatur von etwa -10 bis etwa 100 °C durchgeführt wird.

10. Verfahren gemäß einem der Ansprüche 1 bis 9, wobei das Anionenaustauschermaterial mit einer Lösung eines hydroxidhaltigen Salzes vorbehandelt wird.

11. Verfahren gemäß einem der Ansprüche 1 bis 10, wobei das Gewichtsverhältnis von Aluminium in der Polyaluminiumverbindung zu trockenem Anionenaustauschermaterial etwa 25 bis etwa 0,01 beträgt.

12. Verfahren gemäß einem der Ansprüche 1 bis 11, wobei während eines beliebigen Stadiums des Verfahrens regeneriertes Anionenaustauschermaterial hinzugefügt wird.

## Revendications

1. Procédé de traitement de composés de polyaluminium comprenant la mise en contact d'au moins un composé de polyaluminium dans une solution aqueuse avec un matériau d'échange anionique capable d'accepter des anions ou des groupes anioniques et de donner des ions hydroxyle pendant un temps nécessaire pour obtenir un composé de polyaluminium ayant un rapport molaire d'hydroxyde au polyaluminium supérieur à celui qu'avait le composé de polyaluminium avant sa mise en contact avec le matériau d'échange anionique.

2. Procédé selon la revendication 1, dans lequel le composé de polyaluminium est un chlorure de polyaluminium.

3. Procédé selon la revendication 1 ou 2, dans lequel le procédé est réalisé dans un récipient dans lequel le composé de polyaluminium et le matériau d'échange anionique sont agités de manière homogène.

4. Procédé selon la revendication 1 ou 2, dans lequel le matériau d'échange anionique est chargé dans une colonne à travers laquelle le composé de polyaluminium passe.

5. Procédé selon l'une quelconque des revendications 1 à 3, dans lequel le composé de polyaluminium traité et le matériau d'échange anionique passent à travers un filtre à gros grain capable de séparer le matériau d'échange anionique du composé de polyaluminium traité.

6. Procédé selon la revendication 5, dans lequel le filtre à gros grain a des ouvertures dans la plage allant d'environ 0,01 à environ 5 mm.

7. Procédé selon l'une quelconque des revendications 1 à 6, dans lequel le temps de contact est d'environ 1 seconde à environ 10 heures.

8. Procédé selon l'une quelconque des revendications 1 à 7, dans lequel le rapport molaire initial de OH à Al du composé de polyaluminium est d'environ 0,3 à environ 2,2.

9. Procédé selon l'une quelconque des revendications 1 à 8, dans lequel le procédé est réalisé à une température d'environ -10 à environ 100 °C.

10. Procédé selon l'une quelconque des revendications 1 à 9, dans lequel le matériau d'échange anionique est prétraité avec une solution d'un sel contenant de l'hydroxyde.

11. Procédé selon l'une quelconque des revendications 1 à 10, dans lequel le rapport en poids de l'aluminium dans le composé de polyaluminium au matériau d'échange anionique sec est d'environ 25 à environ 0,01.

12. Procédé selon l'une quelconque des revendications 1 à 11, dans lequel le matériau d'échange anionique régénéré est ajouté pendant n'importe quelle étape du procédé.
